# EUROPEAN PATENT APPLICATION

(11) **EP 4 699 840 A1**
(43) Date of publication of application: **25.02.2026**
(21) Application number: 24934612.3
(22) Date of filing: 21.05.2024
(51) Int. Cl.: B60K 6/36

(54) **POWER SYSTEM AND VEHICLE**

(30) Priority: 11.04.2024 CN 202410434880
(71) Applicant: Chery Automobile Co., Ltd., Wuhu, Anhui 241006 (CN)
(72) Inventor: HAN, Yanyan, Wuhu, Anhui 241006 (CN); ZHOU, Zhiguang, Wuhu, Anhui 241006 (CN); YE, Yuanlong, Wuhu, Anhui 241006 (CN); GAN, Shenglin, Wuhu, Anhui 241006 (CN); DONG, Qixin, Wuhu, Anhui 241006 (CN)
(74) Representative: Yang, Shu
(86) International application number: PCT/CN2024/094427
(87) International publication number: WO 2025/213537

(57) **Abstract**

The present application relates to the technical field of vehicle layout, and in particular to a power system and a vehicle. The power system comprises a driving electric motor, a transmission mechanism, an output mechanism, an electric generator, an engine and a flywheel. The driving electric motor has a first output shaft. The transmission mechanism comprises a transmission shaft, which is in transmission connection with the first output shaft and the output mechanism. The engine is in transmission connection with the flywheel. The orthographic projection of the first output shaft on a first projection plane and the orthographic projection of the transmission shaft on the first projection plane are both spaced apart from the orthographic projection of the flywheel on the first projection plane, and the first projection plane is a plane perpendicular to the lengthwise direction of the engine. The electric generator has an input shaft, the input shaft is in transmission connection with the flywheel, and the orthographic projection of the input shaft on the first projection plane is located within the orthographic projection of the flywheel on the first projection plane. Therefore, the compactness of the power system can be improved, and the width of the power system is reduced, thereby reducing the volume of the power system.

## Description

The present application claims priority to Chinese Patent Application No. 202410434880.7, filed on April 11, 2024, and entitled "POWER SYSTEM AND VEHICLE", the entire content of which is incorporated herein by reference.

### TECHNICAL FIELD

The present disclosure relates to the field of vehicle layout technologies, and in particular, relates to a power system and a vehicle.

### BACKGROUND

With the development of technology, types of power sources for vehicles have also increased. Vehicles using motors and engines as power sources already exist on the market.

A power system of a vehicle, in addition to a power source, also includes a large number of transmission components. The transmission components may output power from the power source to wheels to drive the vehicle.

In the related art, the addition of the power source increases the volume of the power system. However, for some vehicle models with limited available space, the power system with an additional motor as the power source cannot be mounted on these vehicle models.

### SUMMARY

Embodiments of the present disclosure provide a power system and a vehicle, which have a smaller volume. The technical solutions are as follows.

In one aspect, the embodiments of the present disclosure provide a power system. The power system includes a driving motor, a transmission mechanism, an output mechanism, a generator, an engine, and a flywheel. The driving motor is provided with a first output shaft. The transmission mechanism includes a transmission shaft, wherein the transmission shaft is drivingly connected to the first output shaft and the output mechanism. The engine is drivingly connected to the flywheel. An orthographic projection of the first output shaft on a first projection plane and an orthographic projection of the transmission shaft on the first projection plane are both separated from an orthographic projection of the flywheel on the first projection plane, the first projection plane being a plane perpendicular to a length direction of the engine. The generator is provided with an input shaft, wherein the input shaft is drivingly connected to the flywheel, and an orthographic projection of the input shaft on the first projection plane is within the orthographic projection of the flywheel on the first projection plane.

Optionally, an orthographic projection of the first output shaft on a second projection plane is separated from an orthographic projection of the flywheel on the second projection plane, the second projection plane being a plane perpendicular to a width direction of the engine; and at least a part of the output mechanism is disposed between the first output shaft and the flywheel.

Optionally, the output mechanism includes a second output shaft, wherein the second output shaft is drivingly connected to the transmission shaft.

Optionally, an orthographic projection of the second output shaft on the first projection plane is separated from the orthographic projection of the flywheel on the first projection plane.

Optionally, the output mechanism includes a first output gear, wherein the first output gear is sleeved on the second output shaft and drivingly connected to the second output shaft; and the transmission mechanism includes a first transmission gear, wherein the first transmission gear is sleeved on the transmission shaft and drivingly connected to the transmission shaft, and the first output gear meshes with the first transmission gear.

Optionally, the transmission shaft is disposed on a side distal from the engine along a line connecting a center of the second output shaft and a center of the transmission shaft.

Optionally, the driving motor is provided with a first input gear, wherein the first input gear is sleeved on the first output shaft and drivingly connected to the first output shaft; and the transmission mechanism is provided with a second transmission gear, wherein the second transmission gear is sleeved on the transmission shaft and drivingly connected to the transmission shaft, and the first input gear meshes with the second transmission gear.

Optionally, the generator is provided with a second input gear, wherein the second input gear is sleeved on the input shaft and drivingly connected to the input shaft; and the engine is provided with a third output shaft and a second output gear, wherein the third output shaft is drivingly connected to the second output gear and the engine, and the second input gear meshes with the second output gear.

Optionally, the generator and the driving motor are disposed on the same side of the flywheel.

In another aspect, the embodiments of the present disclosure provide a vehicle. The vehicle includes a power system. The power system includes a driving motor, a transmission mechanism, an output mechanism, a generator, an engine, and a flywheel. The driving motor is provided with a first output shaft. The transmission mechanism includes a transmission shaft, wherein the transmission shaft is drivingly connected to the first output shaft and the output mechanism. The engine is drivingly connected to the flywheel. An orthographic projection of the first output shaft on a first projection plane and an orthographic projection of the transmission shaft on the first projection plane are both separated from an orthographic projection of the flywheel on the first projection plane, the first projection plane being a plane perpendicular to a length direction of the engine. The generator is provided with an input shaft, wherein the input shaft is drivingly connected to the flywheel, and an orthographic projection of the input shaft on the first projection plane is within the orthographic projection of the flywheel on the first projection plane.

Optionally, an orthographic projection of the first output shaft on a second projection plane is separated from an orthographic projection of the flywheel on the second projection plane, the second projection plane being a plane perpendicular to a width direction of the engine; and at least a part of the output mechanism is disposed between the first output shaft and the flywheel.

Optionally, the output mechanism includes a second output shaft, wherein the second output shaft is drivingly connected to the transmission shaft.

Optionally, an orthographic projection of the second output shaft on the first projection plane is separated from the orthographic projection of the flywheel on the first projection plane.

Optionally, the output mechanism includes a first output gear, wherein the first output gear is sleeved on the second output shaft and drivingly connected to the second output shaft; and the transmission mechanism includes a first transmission gear, wherein the first transmission gear is sleeved on the transmission shaft and drivingly connected to the transmission shaft, and the first output gear meshes with the first transmission gear.

Optionally, the transmission shaft is disposed on a side distal from the engine along a line connecting a center of the second output shaft and a center of the transmission shaft.

The beneficial effects brought by the technical solutions provided in the embodiments of the present disclosure include at least the following: the operation of the engine can drive the generator to generate electricity, and the generated electricity can power the driving motor. The driving motor can output power to the output mechanism through the transmission mechanism to drive the output mechanism to operate. Configuring the orthographic projection of the input shaft on the first projection plane to be within the orthographic projection of the flywheel on the first projection plane is conducive to shortening a transmission path between the engine and the generator, such that the number of transmission components of the power system in the present disclosure is reduced, thereby reducing the volume of the power system. Configuring the orthographic projection of the first output shaft on the first projection plane and the orthographic projection of the transmission shaft on the first projection plane to be both separated from the orthographic projection of the flywheel on the first projection plane is conducive to forming a space between the first output shaft and the flywheel in the width direction of the engine to arrange the transmission mechanism and the output mechanism, such that the compactness of the power system can be improved, and the width of the power system is shortened, thereby reducing the volume of the power system.

### BRIEF DESCRIPTION OF DRAWINGS

For clearer descriptions of the technical solutions in the embodiments of the present disclosure, the following briefly introduces the accompanying drawings required for describing the embodiments. Apparently, the accompanying drawings in the following description show merely some embodiments of the present disclosure, and persons of ordinary skill in the art may still derive other drawings from these accompanying drawings without creative efforts.
FIG. 1 is a schematic structural diagram of a power system according to an exemplary embodiment of the present disclosure;
FIG. 2 is a front schematic view of a power system according to another exemplary embodiment of the present disclosure; and
FIG. 3 is a side schematic view of a power system according to another exemplary embodiment of the present disclosure.

Reference numerals in the drawings respectively denote:
1, driving motor; 11, first output shaft; 12, first input gear;
2, transmission mechanism; 21, transmission shaft; 22, first transmission gear; 23, second transmission gear;
3, output mechanism; 31, second output shaft; 32, first output gear;
4, generator; 41, input shaft; 42, second input gear;
5, engine; 51, third output shaft; 52, second output gear;
6, flywheel.

### DETAILED DESCRIPTION

For clearer descriptions of the objectives, technical solutions, and advantages of the present disclosure, the embodiments of the present disclosure are described in detail hereinafter with reference to the accompanying drawings. Obviously, the embodiments described are some but not all embodiments of the present disclosure. Based on the embodiments of the present disclosure, all other embodiments derived by persons of ordinary skill in the art without creative efforts shall fall within the protection scope of the present disclosure.

Unless otherwise defined, all technical terms used in the embodiments of the present disclosure have the same meanings commonly understood by those skilled in the art.

For clearer descriptions of the objectives and advantages of the present disclosure, the embodiments of the present disclosure are described in detail hereinafter with reference to the accompanying drawings.

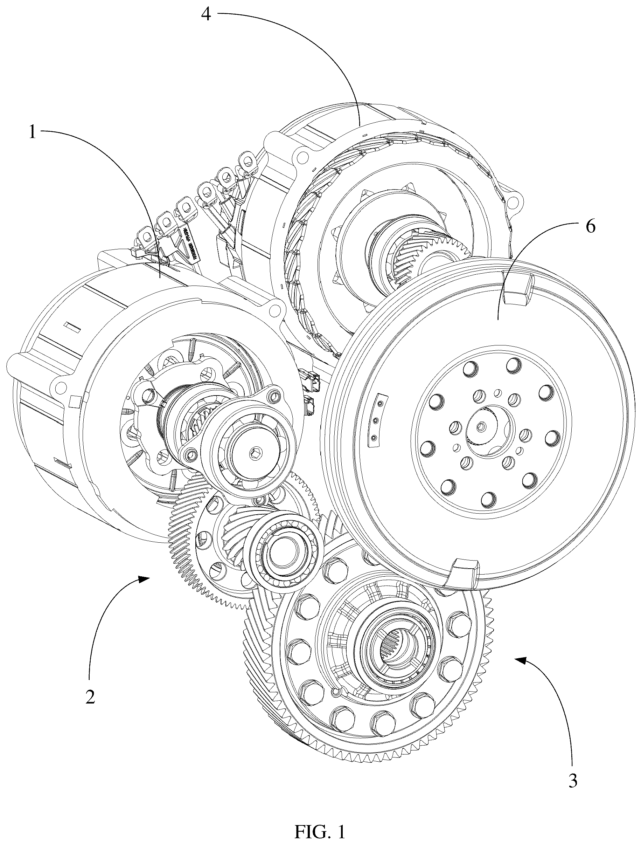

In a first aspect of the present disclosure, a power system is provided. As shown in FIGS. 1, 2, and 3, the power system includes a driving motor 1, a transmission mechanism 2, an output mechanism 3, a generator 4, an engine 5, and a flywheel 6. The driving motor 1 is provided with a first output shaft 11. The transmission mechanism 2 includes a transmission shaft 21, and the transmission shaft 21 is drivingly connected to the first output shaft 11 and the output mechanism 3. The engine 5 is drivingly connected to the flywheel 6. An orthographic projection of the first output shaft 11 on a first projection plane and an orthographic projection of the transmission shaft 21 on the first projection plane are both separated from an orthographic projection of the flywheel 6 on the first projection plane, and the first projection plane is a plane perpendicular to a length direction of the engine 5. The generator 4 is provided with an input shaft 41, the input shaft 41 is drivingly connected to the flywheel 6, and an orthographic projection of the input shaft 41 on the first projection plane is within the orthographic projection of the flywheel 6 on the first projection plane.

It can be understood that the operation of the engine 5 can drive the generator 4 to generate electricity, and the generated electricity can power the driving motor 1. The driving motor 1 can output power to the output mechanism 3 through the transmission mechanism 2 to drive the output mechanism 3 to operate. Configuring the orthographic projection of the input shaft 41 on the first projection plane to be within the orthographic projection of the flywheel 6 on the first projection plane is conducive to shortening a transmission path between the engine 5 and the generator 4, such that the number of transmission components of the power system in the present disclosure is reduced, thereby reducing the volume of the power system. Configuring the orthographic projection of the first output shaft 11 on the first projection plane and the orthographic projection of the transmission shaft 21 on the first projection plane to be both separated from the orthographic projection of the flywheel 6 on the first projection plane is conducive to forming a space between the first output shaft 11 and the flywheel 6 in the width direction of the engine 5 to arrange the transmission mechanism 2 and the output mechanism 3, such that the compactness of the engine 5 can be improved, and the width of the power system is shortened, thereby reducing the volume of the power system.

**In** the embodiments of the present disclosure, the width direction of the vehicle body is generally the same as the axial length direction of a crankshaft of the engine 5.

**In** the related art, during the design of a vehicle, the width of the front cabin longitudinal beam of the vehicle body is generally limited by requirements such as structural strength, and thus cannot be changed. In addition, the width requirement of the vehicle body is relatively fixed and cannot be changed in subsequent designs. The above two factors result in a relatively narrow width space for the vehicle body.

Since the power system was dominated by an internal combustion engine with fewer power sources, the width requirement for the vehicle body was not high, and the width requirement of the vehicle body could be met. With a motor being added to the power system as an additional power source, and the power of the motor being associated with the power of the engine 5, the motor needs to be arranged in the width direction of the engine 5, which leads to an increase in the width of the power system.

However, influenced by the layout requirements of other components and safety performance requirements, the width space of the vehicle body cannot increase along with its width. This results in certain difficulties when arranging the power system on the vehicle.

In the power system of the present disclosure, by improving a positional relationship between the driving motor 1 and the generator 4 relative to the engine 5, the width of the power system is reduced, and the compactness of the power system is improved, thereby reducing the volume of the power system, and reducing the difficulty of arranging the power system on the vehicle body.

In the embodiments of the present disclosure, the driving motor 1 may be drivingly connected to the transmission mechanism 2 through means such as gear meshing. The driving motor 1 may drive the first output shaft 11 to rotate by generating a varying electromagnetic field, thereby enabling the transmission mechanism 2 to transmit power to the output mechanism 3.

In the embodiments of the present disclosure, the transmission mechanism 2 may be drivingly connected to the output mechanism 3 through means such as gear meshing.

In the embodiments of the present disclosure, the output mechanism 3, serving as a power driving component, may include wheels. The power output by the transmission mechanism 2 can drive the wheels to rotate, enabling the normal operation of the power system of the present disclosure.

In the embodiments of the present disclosure, the engine 5 may serve as the power source for the generator 4. By driving the generator 4 to operate, the engine 5 converts kinetic energy generated by fuel combustion into electrical energy of the generator 4. The generated electrical energy may be stored in a battery to drive the driving motor 1 or other components of the vehicle to operate, thereby achieving functions necessary for normal travel of a vehicle; or, the generated electrical energy may directly drive the driving motor 1 to operate.

In the embodiments of the present disclosure, the driving motor 1 may be electrically connected to the generator 4 to directly draw the electrical energy generated by the generator 4.

In the embodiments of the present disclosure, the flywheel 6 may serve as not only an energy storage component to temporarily store excess kinetic energy generated by the engine 5 during operation, but also a starter to provide a certain amount of kinetic energy for the startup of the engine 5 until the engine 5 can drive the generator 4 to operate through fuel combustion.

In the embodiments of the present disclosure, the first projection plane is a plane perpendicular to the length direction of the engine 5. The length direction of the engine 5 may be the axial direction of a crankshaft of the engine 5. The crankshaft includes a plurality of parallel shaft sections. Thus, the axial direction of the crankshaft may refer to the axial direction of any one shaft section.

In the embodiments of the present disclosure, configuring the orthographic projection of the first output shaft 11 on the first projection plane and the orthographic projection of the transmission shaft 21 on the first projection plane to be both separated from the orthographic projection of the flywheel 6 on the first projection plane is conducive to forming a space between the first output shaft 11 and the flywheel 6 in the width direction of the engine 5 to arrange the transmission mechanism 2 and the output mechanism 3. The driving motor 1, serving as a power source, needs to be drivingly connected to the transmission mechanism 2. During operation, since the transmission mechanism 2 generally needs to adjust the power torque generated by the driving motor 1, considerable space around the first output shaft 11 is required for arranging the transmission mechanism 2 and the corresponding auxiliary components thereof. Configuring the orthographic projection of the first output shaft 11 on the first projection plane and the orthographic projection of the transmission shaft 21 on the first projection plane to be both separated from the orthographic projection of the flywheel 6 on the first projection plane is conducive to arranging these auxiliary components between the first output shaft 11 and the flywheel 6, which can improve the compactness of the power system of the present disclosure. Additionally, the driving motor 1 may be more proximal to the flywheel 6 in the width direction of the engine 5, which can improve the compactness of the power system of the present disclosure and is conducive to reducing the volume of the power system of the present disclosure.

In the embodiments of the present disclosure, configuring the orthographic projection of the input shaft 41 on the first projection plane to be within the orthographic projection of the flywheel 6 on the first projection plane is conducive to shortening a transmission path between the engine 5 and the generator 4, such that the number of transmission components of the power system in the present disclosure is reduced, thereby reducing the volume of the power system. Since the generator 4, serving as a driving component of the engine 5, does not have complex working conditions, the generator 4 has a lower power requirement for the engine 5, and there is no need to adjust the power of the engine 5. Thus, the power transmission path between the engine 5 and the generator 4 is shorter. Therefore, configuring the orthographic projection of the input shaft 41 on the first projection plane to be within the orthographic projection of the flywheel 6 on the first projection plane can not only improve the compactness of the power system of the present disclosure, but also adapt to a transmission requirement between the engine 5 and the generator 5.

In the embodiments of the present disclosure, for the driving motor 1 that requires power adjustment to adapt to the working conditions of the output mechanism 3, a transmission path between the driving motor 1 and the output mechanism 3 is longer. For the generator 4 that does not require power adjustment, the transmission path between the generator 4 and the engine 5 is shorter. Therefore, configuring the orthographic projection of the first output shaft 11 of the driving motor 1 with the longer transmission path on the first projection plane and the orthographic projection of the transmission shaft 21 on the first projection plane to be both separated from the orthographic projection of the flywheel 6 on the first projection plane can avoid interference from the engine 5 with the first output shaft 11 and the transmission shaft 21, and is also conducive to the arrangement of the transmission mechanism 2 and the output mechanism 3 to be proximal to the flywheel 6, thereby improving the compactness of the power system of the present disclosure. Configuring the orthographic projection of the input shaft 41 of the generator 4 with the shorter transmission path on the first projection plane to be within the orthographic projection of the flywheel 6 on the first projection plane can improve the compactness of the power system of the present disclosure while adapting to the transmission requirement of the generator 4. In summary, for the power system of the present disclosure, although the driving motor 1 and the generator 4 share the same operating principle and are approximately similar in structure, their positions are determined based on their operating requirements.

In the embodiments of the present disclosure, the width of the power system mainly includes the width of the generator 4, the length of the input shaft 41, the gap between the input shaft 41 and the flywheel 6, the thickness of the flywheel 6, the gap between the flywheel 6 and the engine 5, and the width of the engine 5. The sum of the values of the above parameters may be 350mm, 360mm, 365mm, or 370mm.

In the embodiments of the present disclosure, the driving motor 1 is provided with a first output shaft 11. The driving motor 1 may be drivingly connected to the first output shaft 11 through a coupling. A bearing may be arranged at an end of the first output shaft 11 distal from the driving motor 1. The bearing is used to connect to other components to support the first output shaft 11, thereby enabling the first output shaft 11 to rotate.

In the embodiments of the present disclosure, the generator 4 is provided with an input shaft 41. The generator 4 may be drivingly connected to the input shaft 41 through a coupling. A bearing may be arranged at an end of the input shaft 41 distal from the generator 4. The bearing is used to connect to other components to support the input shaft 41, thereby enabling the input shaft 41 to rotate.

In the embodiments of the present disclosure, the transmission mechanism 2 includes a transmission shaft 21. A bearing may be arranged at an end of the transmission shaft 21. The bearing is used to connect to other components to support the transmission shaft 21, thereby enabling the transmission shaft 21 to rotate.

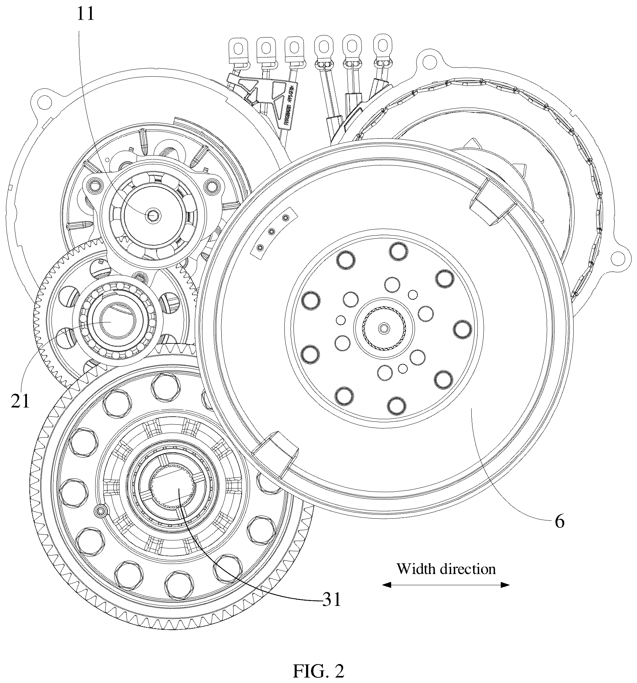

In some embodiments of the present disclosure, power is transmitted between the output mechanism 3 and the first output shaft 11 through the transmission mechanism 2. Due to the presence of the transmission mechanism 2, the output mechanism 3 is generally disposed at a relatively lower position in the power system of the present disclosure (i.e., the position of the crankshaft of the engine 5). As shown in FIG. 2, an orthographic projection of the first output shaft 11 on a second projection plane is separated from an orthographic projection of the flywheel 6 on the second projection plane, the second projection plane is a plane perpendicular to a width direction of the engine 5, and at least a part of the output mechanism 3 is disposed between the first output shaft 11 and the flywheel 6. Such a configuration is conducive to improving the compactness of the power system of the present disclosure.

In the embodiments of the present disclosure, the input shaft 41 of the generator 4 is arranged in the direction of the second projection plane relative to the flywheel 6. Therefore, configuring the orthographic projection of the first output shaft 11 on the second projection plane to be separated from the orthographic projection of the flywheel 6 on the second projection plane is conducive to reducing interference between the input shaft 41 and the transmission mechanism 2. In addition, disposing at least a portion of the output mechanism 3 between the first output shaft 11 and the flywheel 6 is conducive to shortening the length of the power system, thereby reducing the volume of the power system of the present disclosure.

In the embodiments of the present disclosure, the width direction of the engine 5 may be the radial direction of the crankshaft of the engine 5. The crankshaft includes a plurality of parallel shaft sections. Thus, the axial direction of the crankshaft may refer to the radial direction of any one shaft section.

In some embodiments of the present disclosure, as shown in FIG. 2, the output mechanism 3 includes a second output shaft 31. The second output shaft 31 is drivingly connected to the transmission shaft 21.

In the embodiments of the present disclosure, power may be transmitted between the second output shaft 31 and the transmission shaft 21 through rotation. Enabling the transmission shaft 21 to be drivingly connected to the output shaft is conducive for the second output shaft 31 to receive and adjust torque and rotational speed from the transmission shaft 21, and further, the torque and rotational speed are output to a working component, thereby achieving the operation of the power system.

In the embodiments of the present disclosure, a bearing may be arranged at an end of the second output shaft 31. The bearing is used to connect to other components to support the second output shaft 31, thereby enabling the second output shaft 31 to rotate.

In some embodiments of the present disclosure, as shown in FIG. 2, an orthographic projection of the second output shaft 31 on the first projection plane is separated from the orthographic projection of the flywheel 6 on the first projection plane.

In the embodiments of the present disclosure, the output mechanism 3 generally includes a relatively large number of components to achieve power output. Configuring the orthographic projection of the second output shaft 31 on the first projection plane to be separated from the orthographic projection of the flywheel 6 on the first projection plane is conducive for the output mechanism 3 to arrange corresponding components between the output shaft and the flywheel 6, thereby improving the compactness of the power system of the present disclosure.

In some embodiments of the present disclosure, as shown in FIG. 2, the output mechanism 3 includes a first output gear 32. The first output gear 32 is sleeved on the second output shaft 31 and drivingly connected to the second output shaft 31. The transmission mechanism 2 includes a first transmission gear 22. The first transmission gear 22 is sleeved on the transmission shaft 21 and drivingly connected to the transmission shaft 21, and the first output gear 32 meshes with the first transmission gear 22.

In the embodiments of the present disclosure, the meshing of the first transmission gear 22 and the first output gear 32 may transmit the power received by the transmission shaft 21 from the driving motor 1 to the first output gear 32 through rotation, thereby achieving power transmission. The first transmission gear 22 and the first output gear 32 may also adjust the torque and rotational speed of the power output by the output mechanism 3 by adjusting the number of their teeth, respectively.

In the embodiments of the present disclosure, the driving motor 1, the transmission mechanism 2, and the output mechanism 3 are arranged sequentially in the height direction of the power system of the present disclosure. The orthographic projection of the first output gear 32 on the first projection plane partially overlaps with the orthographic projection of the flywheel 6 on the first projection plane.

In the embodiments of the present disclosure, the number of teeth of the first output gear 32 is greater than the number of teeth of the first transmission gear 22 to adjust an output power of the first transmission gear 22, reducing the rotational speed and increasing the torque for the output power. The specific number of teeth of the first output gear 32 and the specific number of teeth of the first transmission gear 22 should be determined according to actual situations.

In the embodiments of the present disclosure, the first output gear 32 may be drivingly connected to the second output shaft 31 through a key connection, such that the second output shaft 31 can drive the first output gear 32 to rotate. The first output gear 32 may also be drivingly connected to the second output shaft 31 by processes such as welding or integral forming, such that the second output shaft 31 can drive the first output gear 32 to rotate.

In the embodiments of the present disclosure, the first transmission gear 22 may be drivingly connected to the transmission shaft 21 through a key connection, such that the transmission shaft 21 can drive the first transmission gear 22 to rotate. The first transmission gear 22 may also be drivingly connected to the transmission shaft 21 by processes such as welding or integral forming, such that the transmission shaft 21 can drive the first transmission gear 22 to rotate.

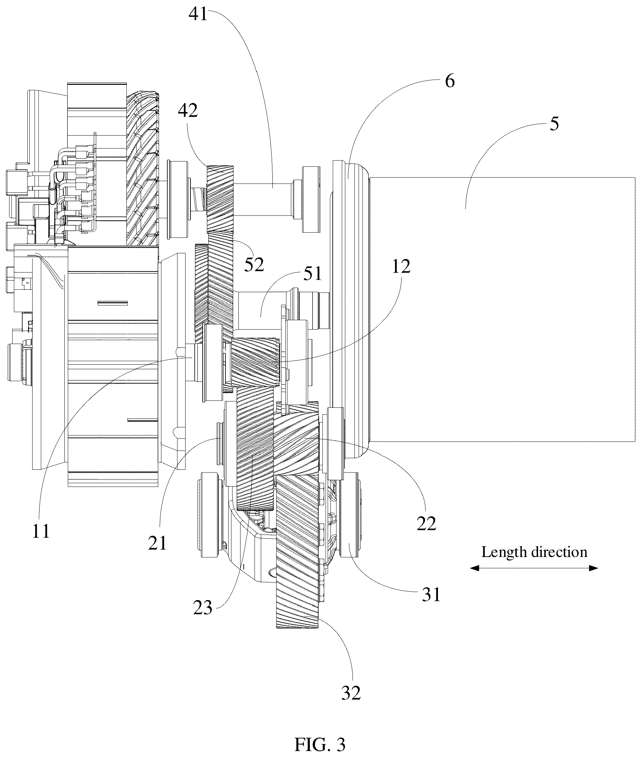

In some embodiments of the present disclosure, as shown in FIG. 3, the transmission shaft 21 is disposed on a side distal from the engine 5 along a line connecting a center of the second output shaft 31 and a center of the transmission shaft 21.

In the embodiments of the present disclosure, with such a configuration, the transmission shaft 21 is relatively distal from the engine 5, which is conducive to arranging corresponding transmission components on the transmission shaft 21 to transmit and adjust the power from the driving motor 1, such that the power can adapt to working conditions of the power system of the present disclosure.

In some embodiments of the present disclosure, as shown in FIG. 3, the driving motor 1 is provided with a first input gear 12. The first input gear 12 is sleeved on the first output shaft 11 and drivingly connected to the first output shaft 11. The transmission mechanism 2 is provided with a second transmission gear 23. The second transmission gear 23 is sleeved on the transmission shaft 21 and drivingly connected to the transmission shaft 21. The first input gear 12 meshes with the second transmission gear 23.

In the embodiments of the present disclosure, the meshing of the first input gear 12 and the second transmission gear 23 may transmit the power of the driving motor 1 to the second transmission gear 23 through rotation, thereby achieving power transmission. The second transmission gear 23 and the first input gear 12 may also preliminarily adjust the torque and rotational speed of the power of the transmission mechanism 2 by adjusting the number of their teeth, respectively, thereby facilitating subsequent adjustments of the power.

In the embodiments of the present disclosure, the number of teeth of the second transmission gear 23 is greater than the number of teeth of the first input gear 12 to adjust an output power of the first input gear 12, reducing the rotational speed and increasing the torque for the output power. The specific number of teeth of the second transmission gear 23 and the specific number of teeth of the first input gear 12 should be determined according to actual situations.

In the embodiments of the present disclosure, the first input gear 12 may be drivingly connected to the first output shaft 11 through a key connection, such that the first output shaft 11 can drive the first input gear 12 to rotate. The first input gear 12 may also be drivingly connected to the first output shaft 11 by processes such as welding or integral forming, such that the first output shaft 11 can drive the first input gear 12 to rotate.

In the embodiments of the present disclosure, the second transmission gear 23 may be drivingly connected to the transmission shaft 21 through a key connection, such that the second transmission gear 23 can drive the transmission shaft 21 to rotate. The second transmission gear 23 may also be drivingly connected to the transmission shaft 21 by processes such as welding or integral forming, such that the second transmission gear 23 can drive the transmission shaft 21 to rotate.

In some embodiments of the present disclosure, as shown in FIG. 3, the generator 4 is provided with a second input gear 42. The second input gear 42 is sleeved on the input shaft 41 and drivingly connected to the input shaft 41. The engine 5 is provided with a third output shaft 51 and a second output gear 52. The third output shaft 51 is drivingly connected to the second output gear 52 and the engine 5, and the second input gear 42 meshes with the second output gear 52.

In the embodiments of the present disclosure, the second output gear 52 meshing with the second input gear 42 may transmit the power of the engine 5 to the second input gear 42 through rotation, thereby achieving power transmission. The second output gear 52 and the second input gear 42 may also adjust the torque and rotational speed of the power of the engine 5 by adjusting the number of their teeth, respectively, which is conducive to improving the efficiency of the engine 5 in driving the generator 4 to operate through the third output shaft 51.

In the embodiments of the present disclosure, a bearing may be arranged at an end of the third output shaft 51 distal from the engine 5. The bearing is used to connect to other components to support the third output shaft 51, thereby enabling the third output shaft 51 to rotate.

In the embodiments of the present disclosure, the number of teeth of the second output gear 52 is greater than the number of teeth of the second input gear 42 to adjust an output power of the second output gear 52, increasing the rotational speed and reducing the torque for the output power. Therefore, the power generation efficiency is improved. The specific number of teeth of the second output gear 52 and the specific number of teeth of the second input gear 42 should be determined according to actual situations.

In the embodiments of the present disclosure, the second input gear 42 may be drivingly connected to the input shaft 41 through a key connection, such that the input shaft 41 can drive the second input gear 42 to rotate. The second input gear 42 may also be drivingly connected to the input shaft 41 by processes such as welding or integral forming, such that the input shaft 41 can drive the second input gear 42 to rotate.

In the embodiments of the present disclosure, the second output gear 52 may be drivingly connected to the third output shaft 51 through a key connection, such that the second output gear 52 can drive the third output shaft 51 to rotate. The second output gear 52 may also be drivingly connected to the third output shaft 51 by processes such as welding or integral forming, such that the second output gear 52 can drive the third output shaft 51 to rotate.

In some embodiments of the present disclosure, the generator 4 and the driving motor 1 are disposed on the same side of the flywheel 6.

It can be understood that disposing the generator 4 and the driving motor 1 on the same side is conducive to improving the compactness of the power system of the present disclosure, thereby reducing the volume of the power system.

**In** a second aspect of the embodiments of the present disclosure, a vehicle is provided. The vehicle includes a power system. The power system includes a driving motor 1, a transmission mechanism 2, an output mechanism 3, a generator 4, an engine 5, and a flywheel 6. The driving motor 1 is provided with a first output shaft 11. The transmission mechanism 2 includes a transmission shaft 21, and the transmission shaft 21 is drivingly connected to the first output shaft 11 and the output mechanism 3. The engine 5 is drivingly connected to the flywheel 6. An orthographic projection of the first output shaft 11 on a first projection plane and an orthographic projection of the transmission shaft 21 on the first projection plane are both separated from an orthographic projection of the flywheel 6 on the first projection plane, and the first projection plane is a plane perpendicular to a length direction of the engine 5. The generator 4 is provided with an input shaft 41, the input shaft 41 is drivingly connected to the flywheel 6, and an orthographic projection of the input shaft 41 on the first projection plane is within the orthographic projection of the flywheel 6 on the first projection plane.

It can be understood that the operation of the engine 5 can drive the generator 4 to generate electricity, and the generated electricity can power the driving motor 1. The driving motor 1 can output power to the output mechanism 3 through the transmission mechanism 2 to drive the output mechanism 3 to operate. Configuring the orthographic projection of the input shaft 41 on the first projection plane to be within the orthographic projection of the flywheel 6 on the first projection plane is conducive to shortening a transmission path between the engine 5 and the generator 4, such that the number of transmission components of the power system in the present disclosure is reduced, thereby reducing the volume of the power system. Configuring the orthographic projection of the first output shaft 11 on the first projection plane and the orthographic projection of the transmission shaft 21 on the first projection plane to be both separated from the orthographic projection of the flywheel 6 on the first projection plane is conducive to forming a space between the first output shaft 11 and the flywheel 6 in the width direction of the engine 5 to arrange the transmission mechanism 2 and the output mechanism 3, such that the compactness of the engine 5 can be improved, and the width of the power system is shortened, thereby reducing the volume of the power system.

In some embodiments of the present disclosure, power is transmitted between the output mechanism 3 and the first output shaft 11 through the transmission mechanism 2. Due to the presence of the transmission mechanism 2, the output mechanism 3 is generally disposed at a relatively lower position in the power system of the present disclosure (i.e., the position of the crankshaft of the engine 5). As shown in FIG. 2, an orthographic projection of the first output shaft 11 on a second projection plane is separated from an orthographic projection of the flywheel 6 on the second projection plane, the second projection plane is a plane perpendicular to a width direction of the engine 5, and at least a part of the output mechanism 3 is disposed between the first output shaft 11 and the flywheel 6. Such a configuration is conducive to improving the compactness of the power system of the present disclosure.

In the embodiments of the present disclosure, the input shaft 41 of the generator 4 is arranged along the direction of the second projection plane relative to the flywheel 6. Therefore, configuring the orthographic projection of the first output shaft 11 on the second projection plane to be separated from the orthographic projection of the flywheel 6 on the second projection plane is conducive to reducing interference between the input shaft 41 and the transmission mechanism 2. In addition, disposing at least a part of the output mechanism 3 between the first output shaft 11 and the flywheel 6 is conducive to shortening the length of the power system, thereby reducing the volume of the power system of the present disclosure.

In the embodiments of the present disclosure, the width direction of the engine 5 may be the radial direction of the crankshaft of the engine 5. The crankshaft includes a plurality of parallel shaft sections. Thus, the axial direction of the crankshaft may refer to the radial direction of any one shaft section.

In some embodiments of the present disclosure, as shown in FIG. 2, the output mechanism 3 includes a second output shaft 31. The second output shaft 31 is drivingly connected to the transmission shaft 21.

In the embodiments of the present disclosure, power may be transmitted between the second output shaft 31 and the transmission shaft 21 through rotation. Enabling the transmission shaft 21 to be drivingly connected to the output shaft is conducive for the second output shaft 31 to receive and adjust torque and rotational speed from the transmission shaft 21, and further, the torque and rotational speed are output to a working component, thereby achieving the operation of the power system.

In the embodiments of the present disclosure, a bearing may be arranged at an end of the second output shaft 31. The bearing is used to connect to other components to support the second output shaft 31, thereby enabling the second output shaft 31 to rotate.

In some embodiments of the present disclosure, as shown in FIG. 2, an orthographic projection of the second output shaft 31 on the first projection plane is separated from the orthographic projection of the flywheel 6 on the first projection plane.

In the embodiments of the present disclosure, the output mechanism 3 generally includes a relatively large number of components to achieve power output. Configuring the orthographic projection of the second output shaft 31 on the first projection plane to be separated from the orthographic projection of the flywheel 6 on the first projection plane is conducive for the output mechanism 3 to arrange corresponding components between the output shaft and the flywheel 6, thereby improving the compactness of the power system of the present disclosure.

In some embodiments of the present disclosure, as shown in FIG. 2, the output mechanism 3 includes a first output gear 32. The first output gear 32 is sleeved on the second output shaft 31 and drivingly connected to the second output shaft 31. The transmission mechanism 2 includes a first transmission gear 22. The first transmission gear 22 is sleeved on the transmission shaft 21 and drivingly connected to the transmission shaft 21, and the first output gear 32 meshes with the first transmission gear 22.

In the embodiments of the present disclosure, the meshing of the first transmission gear 22 and the first output gear 32 may transmit the power received by the transmission shaft 21 from the driving motor 1 to the first output gear 32 through rotation, thereby achieving power transmission. The first transmission gear 22 and the first output gear 32 may also adjust the torque and rotational speed of the power output by the output mechanism 3 by adjusting the number of their teeth, respectively.

In the embodiments of the present disclosure, the driving motor 1, the transmission mechanism 2, and the output mechanism 3 are arranged sequentially in the height direction of the power system of the present disclosure. The orthographic projection of the first output gear 32 on the first projection plane partially overlaps with the orthographic projection of the flywheel 6 on the first projection plane.

In the embodiments of the present disclosure, the number of teeth of the first output gear 32 is greater than the number of teeth of the first transmission gear 22 to adjust an output power of the first transmission gear 22, reducing the rotational speed and increasing the torque for the output power. The specific number of teeth of the first output gear 32 and the specific number of teeth of the first transmission gear 22 should be determined according to actual situations.

In the embodiments of the present disclosure, the first output gear 32 may be drivingly connected to the second output shaft 31 through a key connection, such that the second output shaft 31 can drive the first output gear 32 to rotate. The first output gear 32 may also be drivingly connected to the second output shaft 31 by processes such as welding or integral forming, such that the second output shaft 31 can drive the first output gear 32 to rotate.

In the embodiments of the present disclosure, the first transmission gear 22 may be drivingly connected to the transmission shaft 21 through a key connection, such that the transmission shaft 21 can drive the first transmission gear 22 to rotate. The first transmission gear 22 may also be drivingly connected to the transmission shaft 21 by processes such as welding or integral forming, such that the transmission shaft 21 can drive the first transmission gear 22 to rotate.

In some embodiments of the present disclosure, as shown in FIG. 3, the transmission shaft 21 is disposed on a side distal from the engine 5 along a line connecting a center of the second output shaft 31 and a center of the transmission shaft 21.

In the embodiments of the present disclosure, with such a configuration, the transmission shaft 21 is relatively distal from the engine 5, which is conducive to arranging corresponding transmission components on the transmission shaft 21 to transmit and adjust the power from the driving motor 1, such that the power can adapt to working conditions of the power system of the present disclosure.

Persons of ordinary skill in the art can understand that all or part of the steps described in the above embodiments can be completed through hardware, or through relevant hardware instructed by a program. The program is stored in a computer-readable storage medium, such as a read-only memory (ROM), a magnetic disk, or an optical disk (CD).

Described above are merely preferred embodiments of the present disclosure, and are not intended to limit the present disclosure. Any modifications, equivalent replacements, improvements, and the like made within the spirit and principles of the present disclosure should be included within the protection scope of the present disclosure.

## Claims

1. A power system, comprising: a driving motor (1), a transmission mechanism (2), an output mechanism (3), a generator (4), an engine (5), and a flywheel (6), wherein
the driving motor (1) is provided with a first output shaft (11);
the transmission mechanism (2) comprises a transmission shaft (21), wherein the transmission shaft (21) is drivingly connected to the first output shaft (11) and the output mechanism (3);
the engine (5) is drivingly connected to the flywheel (6);
an orthographic projection of the first output shaft (11) on a first projection plane and an orthographic projection of the transmission shaft (21) on the first projection plane are both separated from an orthographic projection of the flywheel (6) on the first projection plane, the first projection plane being a plane perpendicular to a length direction of the engine (5); and
the generator (4) is provided with an input shaft (41), wherein the input shaft (41) is drivingly connected to the flywheel (6), and an orthographic projection of the input shaft (41) on the first projection plane is within the orthographic projection of the flywheel (6) on the first projection plane.

2. The power system according to claim 1, wherein an orthographic projection of the first output shaft (11) on a second projection plane is separated from an orthographic projection of the flywheel (6) on the second projection plane, the second projection plane being a plane perpendicular to a width direction of the engine (5); and at least a part of the output mechanism (3) is disposed between the first output shaft (11) and the flywheel (6).

3. The power system according to claim 1, wherein the output mechanism (3) comprises a second output shaft (31), wherein the second output shaft (31) is drivingly connected to the transmission shaft (21).

4. The power system according to claim 3, wherein an orthographic projection of the second output shaft (31) on the first projection plane is separated from the orthographic projection of the flywheel (6) on the first projection plane.

5. The power system according to claim 3, wherein the output mechanism (3) comprises a first output gear (32), wherein the first output gear (32) is sleeved on the second output shaft (31) and drivingly connected to the second output shaft (31); and the transmission mechanism (2) comprises a first transmission gear (22), wherein the first transmission gear (22) is sleeved on the transmission shaft (21) and drivingly connected to the transmission shaft (21), and the first output gear (32) meshes with the first transmission gear (22).

6. The power system according to claim 3, wherein the transmission shaft (21) is disposed on a side distal from the engine (5) along a line connecting a center of the second output shaft (31) and a center of the transmission shaft (21).

7. The power system according to claim 1, wherein the driving motor (1) is provided with a first input gear (12), wherein the first input gear (12) is sleeved on the first output shaft (11) and drivingly connected to the first output shaft (11); and the transmission mechanism (2) is provided with a second transmission gear (23), wherein the second transmission gear (23) is sleeved on the transmission shaft (21) and drivingly connected to the transmission shaft (21), and the first input gear (12) meshes with the second transmission gear (23).

8. The power system according to claim 1, wherein the generator (4) is provided with a second input gear (42), wherein the second input gear (42) is sleeved on the input shaft (41) and drivingly connected to the input shaft (41); and the engine (5) is provided with a third output shaft (51) and a second output gear (52), wherein the third output shaft (51) is drivingly connected to the second output gear (52) and the engine (5), and the second input gear (42) meshes with the second output gear (52).

9. The power system according to claim 1, wherein the generator (4) and the driving motor (1) are disposed on a same side of the flywheel (6).

10. A vehicle, comprising: a power system, wherein the power system comprises a driving motor (1), a transmission mechanism (2), an output mechanism (3), a generator (4), an engine (5), and a flywheel (6), wherein
the driving motor (1) is provided with a first output shaft (11);
the transmission mechanism (2) comprises a transmission shaft (21), wherein the transmission shaft (21) is drivingly connected to the first output shaft (11) and the output mechanism (3);
the engine (5) is drivingly connected to the flywheel (6);
an orthographic projection of the first output shaft (11) on a first projection plane and an orthographic projection of the transmission shaft (21) on the first projection plane are both separated from an orthographic projection of the flywheel (6) on the first projection plane, the first projection plane being a plane perpendicular to a length direction of the engine (5); and
the generator (4) is provided with an input shaft (41), wherein the input shaft (41) is drivingly connected to the flywheel (6), and an orthographic projection of the input shaft (41) on the first projection plane is within the orthographic projection of the flywheel (6) on the first projection plane.

11. The vehicle according to claim 10, wherein an orthographic projection of the first output shaft (11) on a second projection plane is separated from an orthographic projection of the flywheel (6) on the second projection plane, the second projection plane being a plane perpendicular to a width direction of the engine (5); and at least a part of the output mechanism (3) is disposed between the first output shaft (11) and the flywheel (6).

12. The vehicle according to claim 10, wherein the output mechanism (3) comprises a second output shaft (31), wherein the second output shaft (31) is drivingly connected to the transmission shaft (21).

13. The vehicle according to claim 12, wherein an orthographic projection of the second output shaft (31) on the first projection plane is separated from the orthographic projection of the flywheel (6) on the first projection plane.

14. The vehicle according to claim 12, wherein the output mechanism (3) comprises a first output gear (32), wherein the first output gear (32) is sleeved on the second output shaft (31) and drivingly connected to the second output shaft (31); and the transmission mechanism (2) comprises a first transmission gear (22), wherein the first transmission gear (22) is sleeved on the transmission shaft (21) and drivingly connected to the transmission shaft (21), and the first output gear (32) meshes with the first transmission gear (22).

15. The vehicle according to claim 12, wherein the transmission shaft (21) is disposed on a side distal from the engine (5) along a line connecting a center of the second output shaft (31) and a center of the transmission shaft (21).
